# EUROPÄISCHE PATENTANMELDUNG

(11) **EP 1 837 089 A2**
(43) Veröffentlichungstag der Anmeldung: **26.09.2007**
(21) Anmeldenummer: 07005434.1
(22) Anmeldetag: 16.03.2007
(51) Int. Cl.: B09B 3/00, B09B 1/00, C12P 1/00

(54) **Verfahren zur Deponierbarmachung der Siebfeinmischfraktionen von Industrie-,Gewerbe-und Siedlungs-Mischabfällen**

(30) Priorität: 21.03.2006 DE 10612840
(71) Anmelder: IMA Sanierungszentren GbR bestehend aus den Gesellschaftern BPG Ges. für Bauplanung u. Umwelttechnik mbH, Frankfurt a. M. und Wayss &, Frankfurt am Main (DE)
(72) Erfinder: Bodo, Kaun, 63329 Egelsbach (DE)
(74) Vertreter: Boecker, Joachim

(57) **Zusammenfassung**

Verfahren zur Deponierbarmachung der Siebfeinmischfraktionen von Industrie-, Gewerbe- und Siedlungs-Mischabfällen. Hierzu gehören beispielsweise Baustellen-Mischabfälle und Schredder-Mischabfälle. Gemäß der Erfindung wird die Siebfeinmischfraktion mit Mikroorganismen vermischt und dann gelagert, wobei die Temperatur des Gemisches kontinuierlich oder intermittierend überwacht wird. Der Vorgang wird solange fortgesetzt bis bestimmte Kennwerte der Siebfeinmischfraktion unter die Werte gesunken sind, die für die Zulassung zur Ablagerung der Siebfeinmischfraktion auf einer Deponie nicht überschritten werden dürfen.

## Beschreibung

Die Erfindung betrifft ein Verfahren zur Deponierbarmachung der Siebfeinmischfraktionen von Industrie-, Gewerbe- und Siedlungs-Mischabfällen, wie beispielsweise Baustellen-Mischabfälle oder Schredder-Mischabfälle.

Abfälle der vorgenannten Art werden von der Abfallindustrie mechanisch zerkleinert und gesiebt. Die groben Siebfraktionen werden wiedergewinnungs- oder Entsorgungsverfahren zugeführt, während die feinen Siebfraktionen in der Regel verbrannt werden müssen, jedoch unter bestimmten Voraussetzungen auch auf Deponien gelagert werden können.

Gesetzliche Vorschriften (Deutsche Deponieablagerungsverordnung) erlauben nur die Ablagerung von Siebfeinmischfraktionen, deren Parameter (Eigenschaften) bestimmten Anforderungen genügen. Das auf den Deponien gelagerte Material soll möglichst inert sein, so daß es zu keinen chemisch-biologischen Umsetzungsprozessen, Gasaustritten oder Bodenverwerfungen kommen kann.

Gewisse Parameter der von der Abfallindustrie produzierten Siebfeinmischfraktionen überschreiten regelmäßig die oberen Grenzen der für die Ablagerung der Siebfeinmischfraktionen auf einer Deponie gesetzlich vorgeschrieben Werte. Hierzu gehören folgende Parameter:
TOC-Wert (total organic carbon)
extrahierbare lipophile Stoffe
MKW-Gehalte (Mineralöl-Kohlenwasserstoffe)
At₄-Wert (Atumungsaktivität = Sauerstoffverbrauch in vier Tagen).

Der TOC-Wert ist das Ergebnis eines analytischen Verfahrens zur Bestimmung des organisch gebundenen Kohlenstoffs in der Siebfeinmischfraktion.

Zur Bestimmung der in der Gesamtheit der organischen Bestandteile enthaltenen umsetzbaren beziehungsweise verrottbaren organischen Anteile (biogenen Anteile), die von Mikroorganismen abgebaut werden können, dient die Bestimmung der Atmungsaktivität. Hierunter versteht man den in vier Tagen vom Material der Siebfeinmischfraktion verbrauchten Sauerstoff, angegeben in mg Sauerstoff/g Material.

Die von der Deponieablagerungsverordnung (Deponieklasse II, Anhang 2) vorgeschriebenen oberen Grenzwerte für die oben genannten Parameter betragen:

| | |
|---|---|
| TOC-Wert: | 18 % |
| extrahierte lipophile Stoffe: | 8000 mg/kg |
| MKW-Wert: | 8000 mg/kg |
| At4-Wert: | 5,0 mg/g |

Der vorliegenden Erfindung liegt die Aufgabe zugrunde, ein Verfahren zur Behandlung von für Deponien bestimmten Siebfeinmischfraktionenen zu entwicklen, durch welches sämtliche oder ein Teil der vorgenannten Parameter der Siebfeinmischfraktion auf Werte vermindert werden, die unter den für die Deponierbarkeit zulässigen Grenzwerte liegen.

Zur Lösung dieser Aufgabe wird ein Verfahren nach dem Oberbegriff des Anspruches 1 vorgeschlagen, welches erfindungsgemäß die im kennzeichnenden Teil des Anspruches 1 genannten Merkmale hat.

Weitere Ausgestaltungen und Weiterbildungen des Verfahrens gemäß der Erfindung sind in den Unteransprüchen genannt.

Durch das mikrobiologische Verfahren gemäß der Erfindung werden die genannten Siebfeinmischfraktionen auf einfache und kostengünstige Weise deponierfähig gemacht. Die Kosten des Verfahrens sind bedeutend geringer als die Kosten für die bisher überwiegend praktizierte Verbrennung der Siebfeinmischfraktionen. Das Verfahren nach der Erfindung kommt für die Siebfeinmischfraktionen von Abfällen aller Art in Betracht, wie industriellen und gewerblichen Mischabfällen und Siedlungs-Mischabfällen, wie beispielsweise Baustellen-Mischabfälle oder Schredder-Mischabfälle.

In seiner Grundausführung erfordert das Verfahren nach der Erfindung lediglich eine Mischung der Siebfeinmischfraktion mit Mikroorganismen, wobei ein hoher Homogenisierungsgrad (größer als 95%) des Gemisches zweckmäßig ist. Als Mikroorganismen kommen bekannte handelsübliche aus Bakterien und/oder Pilzen bestehende Bodenhilfsstoffmikroorganismen mit möglichst hoher Umsatzrate in Betracht. Als Beispiele können die unter den Handelsnamen "Terra Biosa", "EM" und "Animal Biosa" bekannten Mikroorganismen genannt werden. Die zugabemenge an Mikroorganismen ist abhängig von einer vorausgegangenen Analyse der Siebfeinmischfraktion. Ein bevorzugter Wert liegt im Bereich 2 bis 3 kg einer Suspension markterhältlicher Mikroorganismen pro Tonne Siebfeinmischfraktion.

Bei dem Verfahren gemäß der Erfindung ist darauf zu achten, daß die Siebfeinmischfraktion ausreichend feucht ist. Besonders günstig ist ein Wassergehalt von etwa 18-24 Gewichtsprozent. Gegebenenfalls wird der Siebfeinmischfraktion daher zu Beginn und/oder während des Verfahrensablaufes Wasser zugegeben. Das Gemisch aus Siebfeinmischfraktion und Mikroorganismen wird dann zweckmäßigerweise in Form einer Miete aufgesetzt. Als Untergrund, auf dem die Miete gelagert wird, dient vorzugsweise ein wasserundurchlässlicher Boden, beispielsweise eine asphaltierte Fläche. Die Lagerung kann im Freien oder in einer Halle erfolgen. Natürlich ist auch eine Lagerung in geeigneten Behältern (z.B. Containern) möglich.

Durch die Arbeit der Mikroorganismen steigt die Temperatur in dem gelagerten Material an. Daher wird während der Behandlung (Lagerung) die Temperatur des Materials kontinuierlich oder intermittierend gemessen. Die Messung erfolgt an mehreren Stellen (zum Beispiel drei bis zehn) im Inneren der Miete, an denen die höchsten Temperaturen vermutet werden. Die Messung kann beispielsweise mittels einer Sonde erfolgen.

Nähert sich die Temperatur einem das Leben der Mikroorganismen gefährdenden Wert, der etwa bei 70°C liegt (Überschreitung des biotoleranten Bereiches), so muß für eine Kühlung des Materials gesorgt werden. Andererseits ist das Arbeiten mit einer möglichst hohen Temperatur zur Beschleunigung des Verfahrens erwünscht. Vorzugsweise soll die Temperatur im Bereich von 60-70° gehalten werden.

Die Kühlung kann beispielsweise dadurch erfolgen, daß die Miete umgesetzt wird, d.h. an anderer Stelle neu aufgebaut wird. Hierbei findet neben einer Kühlung auch ein Temperaturausgleich zwischen den unterschiedlich heißen Bereichen statt. Natürlich kann die Kühlung des Materials auch auf andere Weise erfolgen, wie beispielsweise durch Belüftung oder kühles Wasser, soweit die Einhaltung des Feuchtigkeitsgehalts letzteres zuläßt.

Gemäß einer Weiterentwicklung des Verfahrens wird dem Gemisch aus Siebfeinmischfraktion und Mikroorganismen Dünger beigemischt, und zwar in der Größenordnung von etwa 0,5 bis 2 kg, vorzugsweise etwa 1 kg, pro Tonne Siebfeinmischfraktion. Insbesondere eignet sich organisch gebundener Kalk, beispielsweise in Form von zermahlenen getrockneten Algen.

Die Behandlungsdauer liegt in der Regel bei etwa 4 bis 8 Wochen.

Der Abschluß der Behandlung kann erfolgen, wenn die genannten Parameterwerte, die in zeitlichen Abständen, zum Beispiel wöchentlich, gemessen werden, die geforderten Grenzwerte unterschritten haben. Zur Bestimmung der Parameterwerte empfiehlt es sich, wegen der Heterogenität des Materials mehrere, vorzugsweise drei, verschiedene Proben je Messung der Miete zu entnehmem und aus den Ergebnissen den Mittelwert zu bilden.

Der Abschluß der Behandlung kann auch in Abhängigkeit des gemessenen Temperaturverlaufs bestimmt werden. Wenn die gemessene Temperatur deutlich abnimmt, so ist dies ein Zeichen dafür, daß die verrottbaren und vergasbaren organischen Bestandteile (biologisch umsetzbarer Anteil) der Siebfeinmischfraktion weitgehend beseitigt sind. Bei dem Restmaterial handelt es sich im wesentlichen nur noch um inerte Stoffe, so daß der TOC-Wert dann im wesentlichen nur noch den Anteil der nichtverrottbaren Kunststoffe repräsentiert. Das Material ist also praktisch inert und damit deponierfähig geworden.

Die Wirksamkeit des Verfahrens gemäß der Erfindung nimmt mit zunehmender Größe der Siebfeinmischfraktion ab, so daß das Verfahren vorzugsweise für Siebfeinmischfraktionen von 0 bis 25 mm, insbesondere für Siebfeinmischfraktionen von 0 bis 20 mm, geeignet ist. Das Verfahren kann aber auch bei gröbereren Siebfeinmischfraktionen noch mit einer gewissen Wirksamkeit angewendet werden.

Die Größe einer Charge ist beliebig und hängt von den gegebenen Umständen ab. Beispielsweise kann eine Charge 250 Tonnen Siebfeinmischfraktion enthalten.

Anhand eines durchgeführten Ausführungsbeispiels soll die Erfindung näher erläutert werden:

Das Ausführungsbeispiel hat die Behandlung einer Metallschredder-Feinmischfraktion mit Siebfraktionen im Bereich von 0 bis 20 mm zum Gegenstand. Die Ausgangswerte für die oben genannten Parameter betrugen:

| | |
|---|---|
| TOC-Wert: | 13,0 % |
| extrahierte lipophile Stoffe: | 15500 mg/kg |
| MKW-Wert: | 9200 mg/kg |
| At4-Wert: | 6,1 mg/g |

Die aufgefahrene Siebfeinmischfraktion wurde zunächst mit Wasser besprüht, um den Wassergehalt auf etwa 20 Gewichtsprozent zu erhöhen. Dann wurde die Siebfeinmischfraktion mit einer handelsübliche Mikroorganismen enthaltenden Suspension besprüht in einer Menge von etwa 3 kg Suspension pro Tonne Siebfeinmischfraktion. Anschließend wurde die Siebfeinmischfraktion mit organisch gebundenem Kalk bestreut in einer Menge von etwa 1 kg pro Tonne Siebfeinmischfraktion. Danach wurde das Material portionsweise in einer Mischeinrichtung gemischt bis eine Homogeninät des Gemisches von etwa 98% erreicht war. Aus dem Gemisch wurde dann auf einem wasserdichten Untergrund eine Miete errichtet. In der ruhenden Miete fand unter der Wirkung der Mikroorganismen ein beachtlicher Temperaturanstieg statt.

Die Temperatur des Gemisches wurde in Zeitabständen an mehreren Stellen im Inneren der Miete gemessen, und zwar zu Beginn 3 bis 4 Mal täglich. Sie erreichte bereits nach 2 Tagen annähernd 70°C. Immer wenn die maximale Temperatur sich dem Wert von 70°C näherte, wurde die Miete durch Neuaufbau an eine andere Stelle umgesetzt, was zu einem Temperaturausgleich der unterschiedlich erwärmten Bereiche und zu einer Abkühlung insgesamt führte. Durch gelegentliches Besprühen der Miete mit Wasser wurde dafür gesorgt, daß der Feuchtigkeitsgehalt der Miete auf etwa 20 Gewichtsprozent konstant gehalten wurde.

Die eingangs genannten Parameter wurden in etwa wöchentlichen Abständen an 6 bis 9 Stellen der Miete gemessen. Bereits nach vier Wochen unterschritten die genannten Parameter die vorgeschriebenen Grenzwerte. Versuchsweise wurde die Behandlung um weitere vier Wochen fortgesetzt. Am Ende dieser Zeit betrug die maximal erreichbare Temperatur nur noch 35°C. Nach dieser Behandlung hatten die genannten Parameter folgende Werte:

| | |
|---|---|
| TOC-Wert: | 6.6 % |
| extrahierte lipophile Stoffe: | 2740 mg/kg |
| MKW-Wert: | 5400 mg/kg |
| At4-Wert: | 1,5 mg/g |

Im Verlauf der Behandlung fand eine optisch wahrnehmbare Veränderung des Materials statt. Es wurde zunehmend kompakter, so daß das Volumen des Materials kleiner wurde. Die Dichte des Materials nahm von 1,3 auf 1,7 g/ccm zu. Die Erdigkeit des ursprünglich eine bräunliche Färbung aufweisenden Materials verstärkte sich. Der gemessene pH-Wert des Materials blieb über den gesamten Behandlungszeitraum praktisch unverändert, wobei eine leichte Drifttendenz zu alkalischen Werten (von pH 7 auf pH 8) beobachtet wurde.

## Patentansprüche

1. Verfahren zur Deponierbarmachung der Siebfeinmischfraktionen von Industrie-, Gewerbe- und Siedlungs-Mischabfällen, wie beispielsweise Baustellen-Mischabfälle oder Schredder-Mischabfälle, **dadurch gekennzeichnet, daß** die Siebfeinmischfraktion mit Mikroorganismen vermischt und dann gelagert wird, wobei die Temperatur des Gemisches kontinuierlich oder intermittierend überwacht wird.

2. Verfahren nach Anspruch 1, **dadurch gekenn-zeichnet, daß** das Gemisch beim Anstieg der Temperatur auf einen die Mikroorganismen bedrohenden Wert gekühlt wird.

3. Verfahren nach Anspruch 2, **dadurch gekennzeichnet, daß** eine Kühlung eingeleitet wird, wenn sich die Temperatur an den heißesten Stellen des Gemisches dem Wert 70°C nähert.

4. Verfahren nach einem der vorhergehenden Ansprüche,
**dadurch gekennzeichnet, daß** die Behandlung beendet wird, wenn die Temperatur des Gemisches wesentlich abnimmt oder nahezu auf Raumtemperatur abgesunken ist (beispielsweise nach 8-12 Wochen).

5. Verfahren nach einem der vorhergehenden Ansprüche,
**dadurch gekennzeichnet, daß** es sich bei den Mikroorganismen um handelsübliche Bodenhilfsstoffmikroorganismen handelt, wie zum Beispiel die unter den Handelsnamen "Terra Biosa", "EM" und "Animal Biosa" bekannten Mikroorganismen.

6. Verfahren nach einem der vorhergehenden Ansprüche,
**dadurch gekennzeichnet, daß** der Wassergehalt des Gemisches für die Dauer des Verfahrens in einem Bereich von 15-30%, vorzugsweise 18-24%, falls nötig durch Zugabe von Wasser, aufrechterhalten wird.

7. Verfahren nach einem der vorhergehenden Ansprüche,
**dadurch gekennzeichnet, daß** das Gemisch bei der Behandlung in Form einer Miete auf einer vorzugsweise undurchlässigen, zum Beispiel asphaltierten, Unterlage angeordnet ist.

8. Verfahren, nach einem der vorhergehenden Ansprüche,
**dadurch gekennzeichnet, daß** die eventuelle erforderliche Kühlung des Gemisches durch erneute Durchmischung und/oder Umsetzung und/oder externer Belüftung der Miete erfolgt.

9. Verfahren nach einem der vorhergehenden Ansprüche,
**dadurch gekennzeichnet, daß** dem Gemisch Dünger in einer Menge von vorzugsweise 0,5 bis 3, insbesondere von 1 kg, pro Tonne Siebfeinmischfraktion beigemischt wird.

10. Verfahren nach Anspruch 9, **dadurch gekennzeichnet, daß** der Dünger aus Kalk, vorzugsweise aus organisch gebundenem Kalk, wie zum Beispiel aus zermahlenen getrockneten Algen, besteht.
